# EUROPEAN PATENT SPECIFICATION

(11) **EP 2 322 027 B1**
(45) Date of publication and mention of the grant of the patent: **25.12.2013**
(21) Application number: 09806614.5
(22) Date of filing: 06.07.2009
(51) Int. Cl.: A01D 34/90

(54) **MOWER TO WHICH BATTERY PACK CAN BE ATTACHED AND DETACHED**
RASENMÄHER MIT ANBRINGBAREM UND ABNEHMBAREM BATTERIEPAKET
TONDEUSE À GAZON À BATTERIE AMOVIBLE

(30) Priority: 11.08.2008 JP 2008206925
(43) Date of publication of application: 18.05.2011
(73) Proprietor: Makita Corporation, Anjo-shi, Aichi 446-8502 (JP)
(72) Inventor: ITO, Ryosuke, Anjo-shi Aichi 446-8502 (JP)
(74) Representative: Kramer - Barske - Schmidtchen
(86) International application number: PCT/JP2009/062280
(87) International publication number: WO 2010/018718

(56) References cited:
- EP-A1- 1 738 638
- EP-B1- 1 075 906
- JP-A- 10 056 845
- JP-A- 63 266 761
- JP-A- 2003 235 772
- JP-A- 2006 217 843
- JP-A- 2006 311 828
- JP-U- 3 027 915

## Description

### Technical Field

This application claims priority to Japanese Patent Application No. 2008-206925 filed on August 11, 2008, the contents of which are hereby incorporated by reference into the present application. The present invention relates to a bush cutter typically used for cutting bushes. Especially, the present invention relates to a type of bush cutter to which a battery pack can be attached and detached.

### Background Art

Japanese Patent Application Publication No. 2006-311828 discloses a bush cutter. The bush cutter comprises an operating rod, a cutting unit provided at a front end of the operating rod, a main unit provided at a rear end of the operating rod, and a transfer shaft provided inside the operating rod. The cutting unit can rotatably support a cutting blade. The main unit houses a motor that drives the cutting blade. The transfer shaft extends from the main unit to the cutting unit, and transfers output torque of the motor from the main unit to the cutting unit.

A battery pack interface that slidably receives a battery pack is formed in the main unit, so that electric power is supplied to the motor from the battery pack that is fitted to the battery pack interface. The battery pack interface is provided at the lower face of the main unit, such that the direction in which the battery pack slides in the battery pack interface is parallel to a central axis of the operating rod.

### Summary of Invention

### Technical Problem

A user of the bush cutter often grips the operating rod during attachment and detachment of the battery pack to/from the main unit. In the conventional bush cutters, however, the direction in which the battery pack slides in the battery pack interface is substantially parallel to the central axis of the operating rod, and the direction in which the user exerts force on the operating rod and on the battery pack coincides with the axial direction of the operating rod. As a result, a gripping hand on the operating rod may slip from the operating rod when the user exerts force so as to attach or detach the battery pack. In particular, dust and moisture are often adhered to the operating rod, since the bush cutter is mainly used outdoors. In such cases, the hand that grips the operating rod is yet more likely to slip, which can make attachment and detachment of the battery pack very cumbersome.
In the light of the above, it is an object of the present invention to provide a bush cutter that facilitates easy attachment and detachment of a battery pack.

### Solution to Technical Problem

The above object can be achieved by providing a bush cutter according to claim 1. A bush cutter comprises an operating rod, a cutting unit, a main unit and a transfer shaft. The cutting unit is disposed at a front end of the operating rod, and is configured to rotatably support a cutting blade. The main unit is disposed at a rear end of the operating rod, and houses a motor that drives the cutting blade. The transfer shaft is disposed within the operating rod, and is configured to transfer output torque of the motor from the main unit to the cutting unit.

A battery pack interface is formed at the main unit. The battery pack interface is configured to slidably receive a battery pack that supplies electric power to the motor. In this bush cutter, a direction in which the battery pack slides in the battery pack interface is angled with respect to a central axis of the operating rod. That is, the direction in which the battery pack slides in the battery pack interface is not parallel to an axial direction of the operating rod.
In the above configuration, a direction in which the user exerts force on the operating rod and on the battery pack when attaching or detaching the battery pack while gripping the operating rod does not coincide with the axial direction of the operating rod. As a result, the hand that grips the operating rod is less likely to slip on the operating rod. The user can thus attach and detach the battery pack more easily.

The direction in which the battery pack slides in the battery pack interface forms a large angle with respect to the central axis of the operating rod. In particular, the slipping of the hand that grips the operating rod can be significantly prevented if the direction in which the battery pack slides in the battery pack interface is angled at or over 45 degrees with respect to the central axis of the operating rod. Slipping of the hand that grips the operating rod can be prevented yet more reliably if the direction in which the battery pack slides in the battery pack interface is substantially perpendicular to the central axis of the operating rod.

In a case where in the above-described bush cutter the operating rod is connected to the front portion of the main unit, the battery pack interface is preferably arranged at the rear portion of the main unit. That is, the operating rod and the battery pack interface are preferably disposed in the main unit so as to be positioned on opposite sides of one another. By virtue of the above configuration, the bush cutter is significantly prevented from rotating about the operating rod when the user attaches or detaches the battery pack while gripping the operating rod. The user can thus exert more readily a force on the operating rod and the battery pack, and can attach and detach the battery pack more easily.

Preferably, when in the above bush cutter a rotation axis of the cutting blade and the central axis of the operating rod are arranged on a vertical plane, the direction in which the battery pack slides in the battery pack interface becomes parallel with the vertical plane. Such a configuration allows the battery pack to be attached and detached more easily, without the attitude of the bush cutter being readily upset, when the user attaches or detaches the battery pack while gripping the operating rod.

Preferably, when in the above bush cutter a rotation axis of the cutting blade and the central axis of the operating rod are arranged on a vertical plane and the central axis of the operating rod is arranged on a horizontal plane, a direction in which the battery pack slides to be attached to the battery pack interface becomes downward and a direction in which the battery pack slides to be detached from the battery pack interface becomes upward.
The attitude of the bush cutter can thus be stabilized upon setting the main unit on the ground during attachment and detachment of the battery pack to/from the main unit. At this time, neither the battery pack nor the hand that is gripping the battery pack is hampered by the ground, if the direction in which the battery pack slides upon attachment to the battery pack interface becomes downward, and the direction in which the battery pack slides upon detachment from the battery pack interface becomes upward.

### Advantageous Effects of Invention

The present invention affords a bush cutter that facilitates easy attachment and detachment of the battery pack.

### Brief Description of Drawings

FIG. 1 is a diagram illustrating an outer appearance of a bush cutter in an embodiment;
FIG. 2 is a cross-sectional diagram illustrating a configuration of a main unit;
FIG. 3 is a cross-sectional diagram along line III-II in FIG. 2;
FIG. 4 is a cross-sectional diagram along line IV-IV in FIG. 2;
FIG. 5 is a diagram illustrating a sliding direction of a battery pack;
FIG. 6 a diagram illustrating a fixing structure of an operating rod in the main unit;
FIG. 7 is a cross-sectional diagram illustrating a configuration of a cutting unit; and
FIG. 8 is a diagram illustrating a variation of the main unit.

### Description of Embodiment

Preferred aspects of below embodiment will be listed.
(Feature 1) Preferably, an operating rod has a hollow shape (pipe shape), and extends in a straight line.
(Feature 2) Preferably, a handle for gripping by a user is provided in the operating rod. In this case, preferably, the handle has a pair of left and right handles.
(Feature 3) In a case where the operating rod is disposed at a front portion of a main unit and a battery pack interface is formed at a rear portion of the main unit, the battery pack interface is preferably positioned on an extension line of a central axis of the operating rod. By virtue of the above configuration, a bush cutter is prevented more effectively from rotating about the operating rod when a user attaches or detaches a battery pack while gripping the operating rod.
(Feature 4) In a torque transfer path from a motor to a cutting blade, there are preferably provided: a drive side coupling shaft connected to a motor side; a driven side coupling shaft connected to a cutting blade side and adjacent to the drive side coupling shaft in an axial direction; and a coil spring coiled around the drive side coupling shaft and the driven side coupling shaft, straddling both shafts. In this case, preferably, a coiling direction of the coil spring from the drive side coupling shaft to the driven side coupling shaft is the same as a rotation direction of the drive side coupling shaft. Such a configuration allows limiting torque that is transferred from the motor to the cutting blade upon startup of the motor or when the cutting blade is acted upon by excessive external force.

### Embodiment

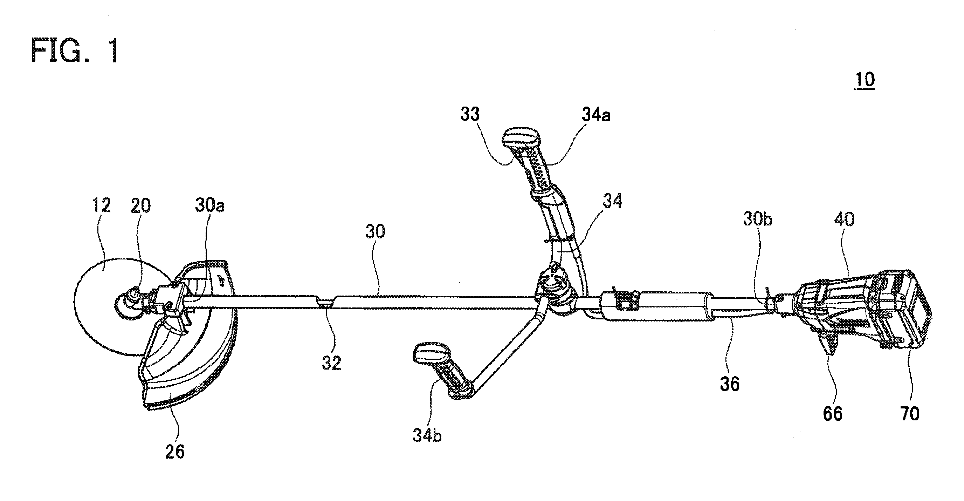

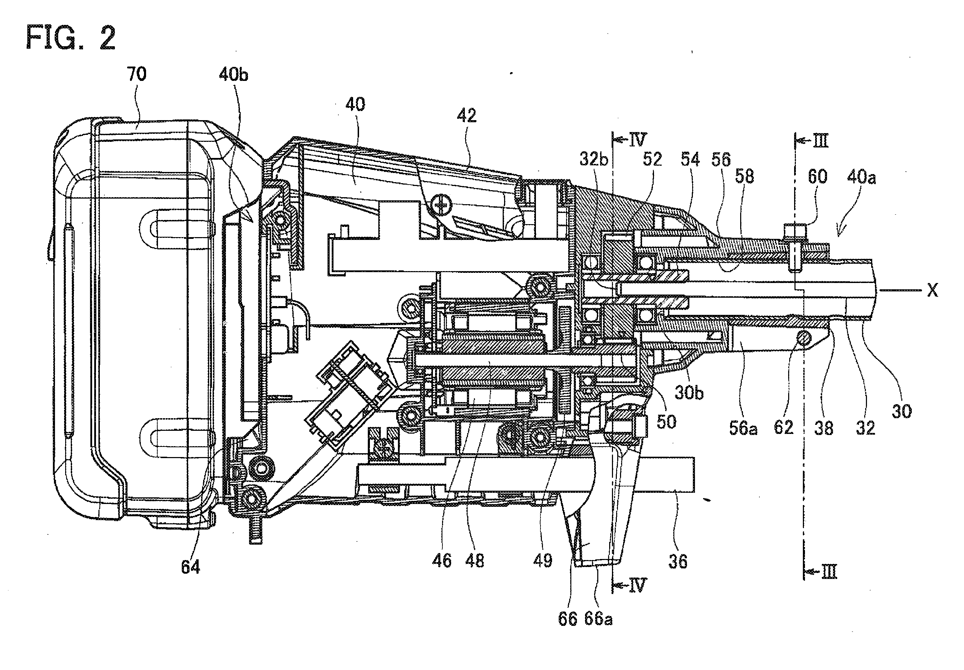

An embodiment in which the present invention is realized will be explained next with reference to accompanying drawings. FIG. 1 illustrates the outer appearance of a bush cutter 10 of the present embodiment. The bush cutter 10 is a power tool used in a cutting operation such as weed cutting.
As illustrated in FIG. 1, the bush cutter 10 comprises an operating rod 30, a cutting unit 20 provided at a front end 30a of the operating rod 30, and a main unit 40 provided at a rear end 30b of the operating rod 30. The operating rod 30 has a hollow pipe-like shape, and extends in a straight line. A cutting blade 12 is rotatably attached to the cutting unit 20. A motor 46 (FIG. 2) for driving the cutting blade 12 is housed in the main unit 40. A battery pack 70 that supplies electric power to the motor 46 is detachably attached to the main unit 40. A transfer shaft 32 is rotatably housed within the operating rod 30. The transfer shaft 32 extends from the main unit 40 to the cutting unit 20, and transmits output torque of the motor 46 from the main unit 40 to the cutting unit 20.

A handle 34 for gripping by a user is provided in the operating rod 30. The handle 34 comprises a right handle 34a and a left handle 34b. A trigger-type start switch 33 is provided in the right handle 34a. The start switch 33 is electrically connected to the main unit 40 by an electrical cord 36. The electrical cord 36 is routed from the main unit 40, along the operating rod 30, up to the right handle 34a. The motor 46 of the main unit 40 rotates when the start switch 33 is turned on. The motor 46 of the main unit 40 stops when the start switch 33 is turned off.
A stand 66 is provided in the main unit 40. The stand 66 is provided so as to protrude out of the main unit 40. When the bush cutter 10 is set on a ground, the stand 66 abuts the ground, thereby supporting the bush cutter 10.

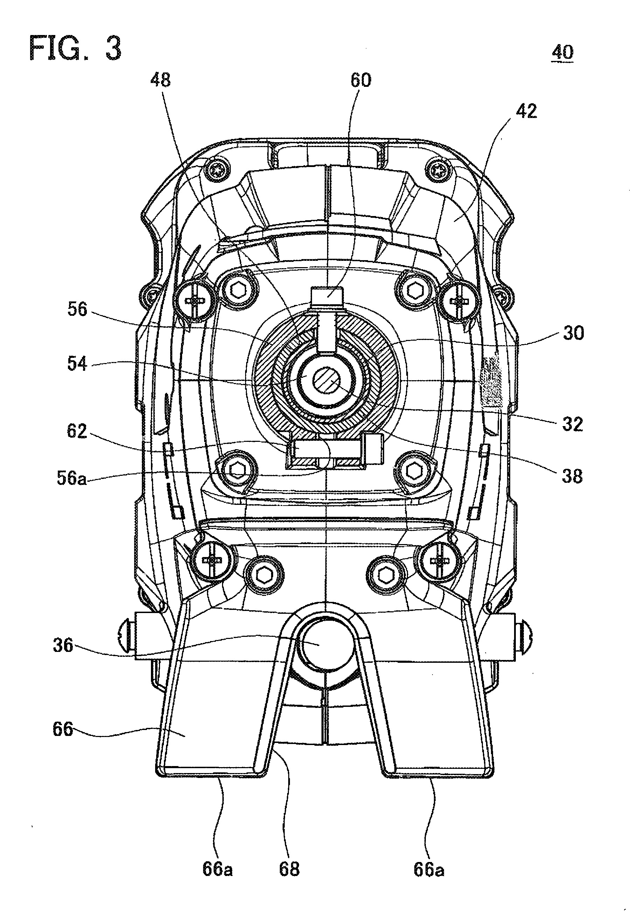

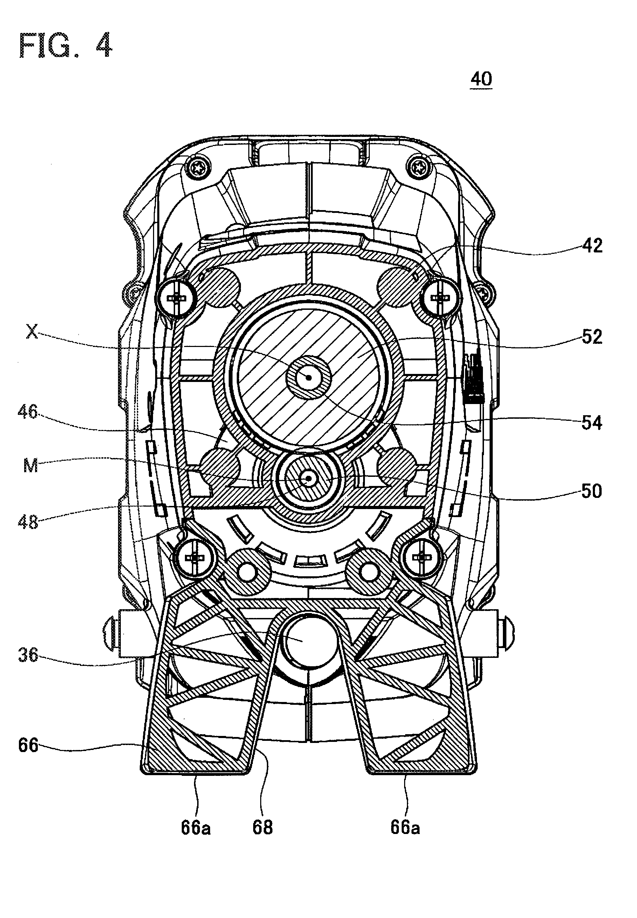

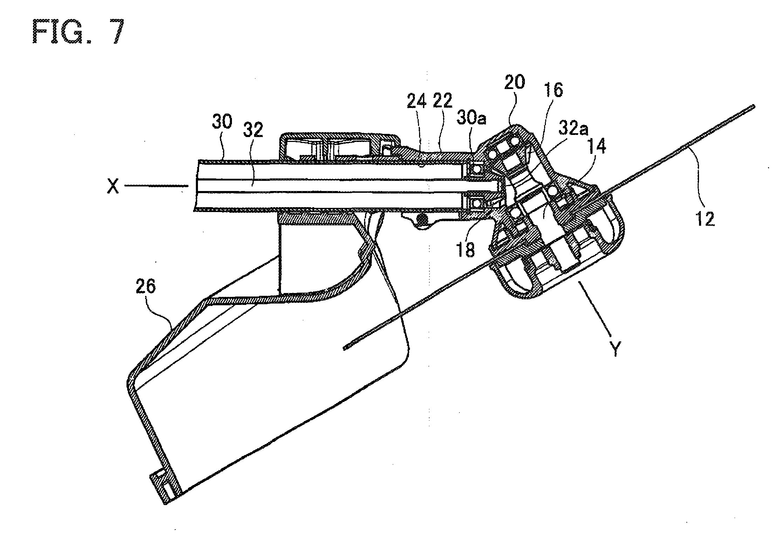

The configuration of the main unit 40 will be explained with reference to FIG. 2, FIG. 3 and FIG. 4. FIG. 2 is a cross-sectional diagram illustrating the configuration of the main unit 40. The cross-sectional diagram illustrated in FIG. 2 depicts a cross section that encompasses a rotation axis Y of the cutting blade 12 (see FIG. 7) and a central axis X of the operating rod 30. FIG. 3 is a cross-sectional diagram along line III-III in FIG. 2. FIG. 4 is a cross-sectional diagram along line IV-IV in FIG. 2. The central axis X of the operating rod 30 is also a rotation axis X of the transfer shaft 32.

As illustrated in FIG. 2, the main unit 40 comprises a main housing 42. The rear end 30b of the operating rod 30 is fixed to a front portion 40a of the main unit 40. A battery pack interface 64, to/from which the battery pack 70 is attached/detached, is provided at a rear portion 40b of the main unit 40. The above-described stand 66 is detachably bolted to a lower portion of the main housing 42. A contact area 66a for abutting the ground or the like is formed at a leading end portion of the stand 66. The above-described electrical cord 36 is routed so as to extend outward from inside the main housing 42, up to the operating rod 30, across the stand 66.

As illustrated in FIG. 3 and FIG. 4, a cord passage section 68 for allowing the electrical cord 36 to pass is formed in the stand 66. The cord passage section 68 has a notched shape continuing from an outer edge of the stand 66. The cord passage section 68 having the notched shape continues from substantially a center of the contact area 66a of the stand 66 toward the main unit 40. The cord passage section 68 having the notched shape becomes narrower as the cord passage section 68 extends from of the contact area 66a of the stand 66 toward the main unit 40.
Pinching of the electrical cord 36 between the ground and the contact area 66a of the stand 66 can be averted, upon setting of the bush cutter 10 on the ground, if the cord passage section 68 is formed in the stand 66. A shape of the cord passage section 68 may be a notch, as illustrated in the present embodiment, or may be a hole running through the stand 66. However, the electrical cord 36 can be arranged more easily in the cord passage section 68 during manufacture or re-assembly after repair of the bush cutter 10, if the cord passage section 68 has the notched shape. In particular, the operation of arranging the electrical cord 36 on the cord passage section 68 becomes simpler if a width of the cord passage section 68 expands toward an opening side of the cord passage section 68. Loss of strength of the stand 66 resulting from forming the cord passage section 68 can be averted if the cord passage section 68 having the notched shape continues from the contact area 66a of the stand 66 toward the main unit 40.

As illustrated in FIG. 2 and FIG. 4, in the main housing 42, the motor 46 for driving the cutting blade 12, a first gear 50 fixed to an output shaft 48 of the motor 46 so as not to be capable of rotating relative to the output shaft 48, and a second gear 52 that engages with the first gear 50 are provided. A rear end 32b of the transfer shaft 32 is fixed to second gear 52, via a coupling member 54, so as not to be capable of rotating relative to the second gear 52. Output torque of the motor 46 is transferred to the transfer shaft 32 via the first gear 50 and the second gear 52. The second gear 52 is larger than the first gear 50. Also, a number of teeth of the second gear 52 is greater than the number of teeth of the first gear 50. As a result, the output torque of the motor 46 is amplified between the first gear 50 and the second gear 52. That is, the first gear 50 and the second gear 52 constitute a first reduction mechanism that amplifies the output torque of the motor 46, between the motor 46 and the transfer shaft 32. Cooling fins 49 are provided on the output shaft 48 of the motor 46.

As illustrated in FIG. 4, a rotation axis M of the motor 46 is positioned below the rotation axis X of the transfer shaft 32. More precisely, the rotation axis M of the motor 46 is positioned vertically below the rotation axis X of the transfer shaft 32, when the rotation axis Y of the cutting blade 12 and the rotation axis X of the transfer shaft 32 are positioned within a vertical plane, and the rotation axis X of the transfer shaft 32 is positioned within a horizontal plane. Such a configuration allows the balance of the bush cutter 10 to be readily stabilized during a bush cutting operation through gripping of the handle 34 by the user. The rotation axis M of the motor 46 may be positioned above the rotation axis X of the transfer shaft 32. In this configuration as well, the balance of the bush cutter 10 becomes comparatively stable.

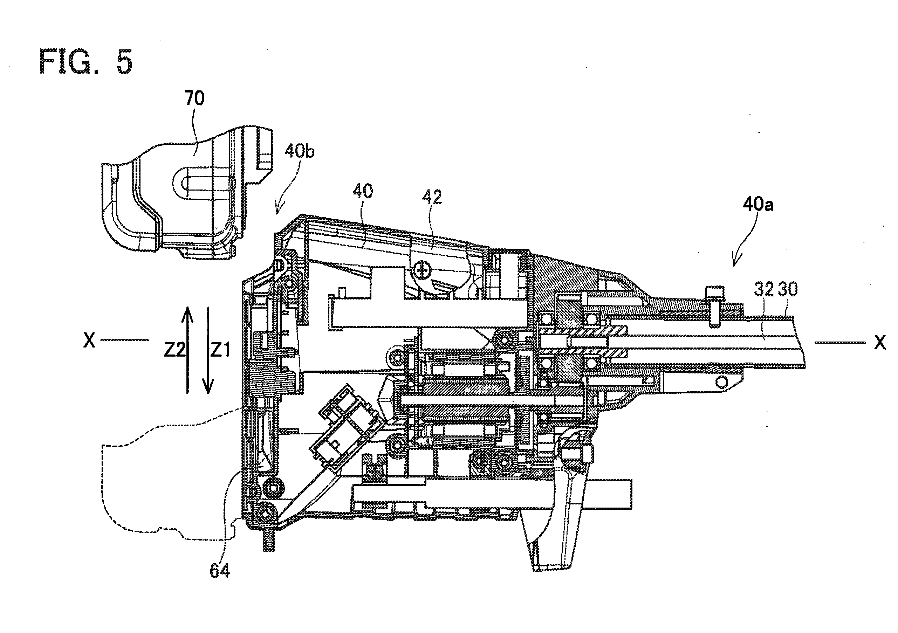

An attachment structure of the battery pack 70 in the main unit 40 will be explained next with reference to FIG. 2 and FIG. 5. As illustrated in FIG. 2, the battery pack interface 64 is formed at the rear portion 40b of the main unit 40. The battery pack interface 64 has a structure that allows the battery pack 70 to be attached and detached. As illustrated in FIG. 5, the battery pack interface 64 slidably receives the battery pack 70. Arrows Z1 and Z2 in FIG. 5 indicate a sliding direction of the battery pack 70 in the battery pack interface 64. The sliding direction of the battery pack 70 in the battery pack interface 64 is substantially perpendicular to the central axis X of the operating rod 30. The downward-pointing arrow Z1 denotes the sliding direction of the battery pack 70 during the attachment thereof, while the upward-pointing arrow Z2 denotes the sliding direction of the battery pack 70 during the detachment thereof. Thus, the sliding direction upon the attachment of the battery pack 70 to the battery pack interface 64 becomes downward, and the sliding direction upon the detachment of the battery pack 70 from the battery pack interface 64 becomes upward. More precisely, the sliding direction upon the attachment of the battery pack 70 to the battery pack interface 64 becomes vertically downward, and the sliding direction upon the detachment of the battery pack 70 from the battery pack interface 64 becomes vertically upward, when the rotation axis Y of the cutting blade 12 and the rotation axis X of the transfer shaft 30 are positioned within the vertical plane, and the rotation axis X of the transfer shaft 30 is positioned within the horizontal plane.

In the bush cutter 10 of the present embodiment, as described above, the sliding direction (Z1, Z2) of the battery pack 70 in the battery pack interface 64 is not parallel to the central axis X of the operating rod 30, but is angled with respect to the central axis X of the operating rod 30. Upon attachment and detachment of the battery pack 70 while the user is gripping the operating rod 30, the above configuration makes it unlikelier for the operating rod 30 to slip from the user's hand, and makes forces easier to be exerted onto the operating rod 30 and the battery pack 70. The battery pack 70 can be attached and detached more easily as a result. Herein, the sliding direction (Z1, Z2) of the battery pack 70 need not necessarily be perpendicular to the central axis X of the operating rod 30. Preferably, however, the angle formed by the sliding direction (Z1, Z2) of the battery pack 70 and the central axis X of the operating rod 30 is a large angle. In particular, it is found that that significant effects are elicited when the angle is 45 degrees or greater.
The bush cutter 10 of the present embodiment is configured in such a manner that the sliding direction upon the attachment of the battery pack 70 to the battery pack interface 64 becomes downward, and that the sliding direction upon the detachment of the battery pack 70 from the battery pack interface 64 becomes upward. As a result, neither the battery pack 70 nor the hand of the user who is gripping the battery pack 70 is hampered by the ground upon attachment and detachment of the battery pack 70 in a state where the bush cutter 10 is set on the ground using the stand 66.

A further explanation follows next on a positional relationship between the battery pack 70 that is fitted to the main unit 40, and the rotation axis X of the motor 46 and the rotation axis Y of the transfer shaft 32. The battery pack 70 is attached to the rear portion 40b of the main unit 40 and is positioned on an extension line of the rotation axis X of the motor 46 and the rotation axis Y of the transfer shaft 32. The battery pack 70 has a substantially rectangular parallelepiped shape. A longitudinal direction of the battery pack 70, when fitted to the main unit 40, is an up-and-down direction in FIG. 2. Specifically, the longitudinal direction of the battery pack 70 fitted to the main unit 40 matches a direction in which the rotation axis X of the motor 46 and the rotation axis Y of the transfer shaft 32 are arrayed. The main unit 40 can be made comparatively small by a structure such that the direction in which the rotation axis X of the motor 46 and the rotation axis Y of the transfer shaft 32 are arrayed (specifically, the direction in which the transfer shaft 32 and the output shaft 48 of the motor 46 are arrayed) matches the longitudinal direction of the battery pack 70 fitted to the main unit 40.

An explanation follows next on a connecting structure between the main unit 40 and the operating rod 30, with reference to FIG. 2 and FIG. 3. A tubular and protruding rod fixing section 56 is provided at the front portion 40a of the main unit 40. The rod fixing section 56 is bolted to the main housing 42. A rod insertion hole 58 is formed in the rod fixing section 56. A rear end portion (a portion over the length of the operating rod 30 that encompasses the rear end 30b) is inserted into the rod insertion hole 58. A tubular sleeve 38, formed of elastomer material, is provided at the rear end portion of the operating rod 30. The rear end portion of the operating rod 30 is inserted, together with the sleeve 38, into the rod insertion hole 58 of the rod fixing section 56. A slit 56a is formed in the rod fixing section 56, such that the rod insertion hole 58 widens upon insertion of the operating rod 30. The operating rod 30 inserted into the rod insertion hole 58 is fixed by two bolts 60, 62.

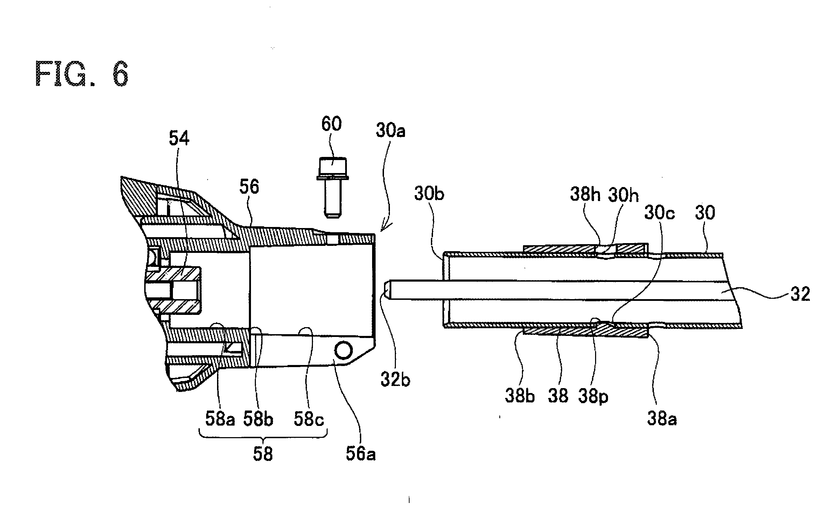

FIG. 6 illustrates a state in which the operating rod 30 is detached from the rod fixing section 56. As illustrated in FIG. 6, the sleeve 38 fits onto an outer circumferential surface of the operating rod 30. The sleeve 38 has a tapered shape, such that the diameter of the sleeve 38 decreases from one end 38a to another end 38b. That is, the diameter of the sleeve 38 decreases toward the rear end 30b of the operating rod 30. The tapered shape of the sleeve 38 facilitates easy insertion of the operating rod 30, together with the sleeve 38, into the rod insertion hole 58. A protrusion 38p is formed on the inner face of the sleeve 38a. The protrusion 38p engages with a recess (through-hole) 30c that is formed in the operating rod 30. As a result, the sleeve 38 is prevented from moving with respect to the operating rod 30 upon insertion of the operating rod 30, together with the sleeve 38, into the rod insertion hole 58.
The rod insertion hole 58 of the rod fixing section 56 has a shape corresponding to that of the operating rod 30 having the sleeve 38 fixed thereto. As illustrated in FIG. 6, the rod insertion hole 58 comprises a first portion 58a at which the operating rod 30 is directly inserted, a second portion 58c at which the operating rod 30 is inserted together with the sleeve 38, and a step 58b formed between the first portion 58a and the second portion 58c. The first portion 58a has a constant diameter in the axial direction, so as to conform to the shape of the operating rod 30. The second portion 58c has a tapered shape with a changing diameter in the axial direction, so as to conform to the shape of the sleeve 38.

The operating rod 30 is formed out of general-purpose pipe stock, and is shaped to a simple cylindrical shape. As a result, the operating rod 30 can be used not only in the bush cutter 10 of the present embodiment, but also in other models. An operating rod of a bush cutter having an engine as a power source is used in the bush cutter 10 of the present embodiment. However, the operating rod 30 may be wrongly assembled, at the manufacturing facility of the bush cutter 10, in case that the operating rod 30 is shared across various models. Specifically, a problem may arise in that the operating rod 30 prepared for manufacture of the bush cutter 10 of the present embodiment ends up being employed in the manufacture of other models.
To deal with the above issue, the sleeve 38 is provided in the operating rod 30 of the bush cutter 10 of the present embodiment, to prevent thereby the operating rod 30 from being assembled into other models. Assembly of the operating rod 30 into other models can be prevented by providing the sleeve 38, having a special shape, in the operating rod 30 having a simple shape. The sleeve 38 functions as an adapter that adapts the operating rod 30 to the rod insertion hole 58. In a case where the operating rod 30 is shared by two models, one of the models may have a structure that requires the sleeve 38, while the other model has a structure that does not require the sleeve 38. As regards the present embodiment, engine type bush cutters that share the operating rod 30 have a structure that does not require the sleeve 38. Therefore, the operating rod 30 with the sleeve 38 attached thereto cannot be assembled into such engine type bush cutters.

An explanation follows next, with reference to FIG. 7, on the configuration of the cutting unit 20. As illustrated in FIG. 7, a rod fixing section 22 is formed in the cutting unit 20. A rod insertion hole 24 is formed in the rod fixing section 22. A front end portion (a portion over the length of the operating rod 30 that encompasses a front end 30a) is inserted into the rod insertion hole 24. A cutting blade shaft 14 is rotatably provided in the cutting unit 20. A disc-like cutting blade 12 is attached to the cutting blade shaft 14. Instead of the disc-like cutting blade 12, a rope-like cutting blade, of nylon cord or the like, may also be attached to the cutting blade shaft 14. A safety cover 26 is provided in the cutting unit 20.

A third gear 18 and a fourth gear 16 are provided in the cutting unit 20. The third gear 18 is fixed to the front end 32a of the transfer shaft 32, so as not to be capable of rotating relative to the transfer shaft 32. The fourth gear 16 is fixed to the cutting blade shaft 14, so as not to be capable of rotating relative to the cutting blade shaft 14, and engages with the third gear 18. The third gear 18 and the fourth gear 16 are bevel gears. Torque from the transfer shaft 32 is transferred to the cutting blade shaft 14 via the third gear 18 and the fourth gear 16. The fourth gear 16 is larger than the third gear 18. The number of teeth of the fourth gear 16 is greater than the number of teeth of the third gear 18. As a result, torque from the transfer shaft 32 is amplified between the third gear 18 and the fourth gear 16. Specifically, the third gear 18 and the fourth gear 16 constitute a second reduction mechanism that amplifies the torque from the transfer shaft 32, between the transfer shaft 32 and the cutting blade shaft 14. In the bush cutter 10, the output torque of the motor 46 is amplified in two stages, by the first gear 50 and the second gear 52 (first reduction mechanism) provided in the main unit 40, and by the third gear 18 and fourth gear 16 (second reduction mechanism) provided in the cutting unit 20.

In the bush cutter 10, as described above, the sliding direction of the battery pack 70 in the battery pack interface 64 is angled with respect to the central axis X of the operating rod 30. The above configuration makes it unlikelier for the operating rod 30 to slip from the user's hand, and facilitates easy operation of attachment and detachment the battery pack 70 upon attachment and detachment of the battery pack 70 while the user is gripping the operating rod 30.

A cord passage section 68 for allowing the electrical cord 36 to pass is formed in the stand 66 of the main unit 40 of the bush cutter 10. As a result, the electrical cord 36 is not pinched between the stand 66 and the ground, and damage to the electrical cord 36 is prevented, upon setting of the bush cutter 10 on the ground.

In the bush cutter 10, the sleeve 38 (adapter) is fixed to the outer circumferential surface of the rear end portion of the operating rod 30, and the main unit 40 has formed therein the rod insertion hole 58 that receives the rear end portion of the operating rod 30 having the sleeve 38 fixed thereto. Such a structure allows preventing the operating rod 30 from being erroneously used in the manufacture of other models.

In the bush cutter 10, reduction mechanisms for amplifying the output torque of the motor 46 are provided in the main unit 40 and in the cutting unit 20. Specifically, the first gear 50 and the second gear 52 constitute the first reduction mechanism, in the main unit 40, while the third gear 18 and the fourth gear 16 constitute the second reduction mechanism, in the cutting unit 20. Such a structure allows significantly amplifying the output torque of the motor 46 without increasing the size of the main unit 40 or of the cutting unit 20. This allows, as a result, using a high-revolutions type (low-torque type) small motor as the motor 46.

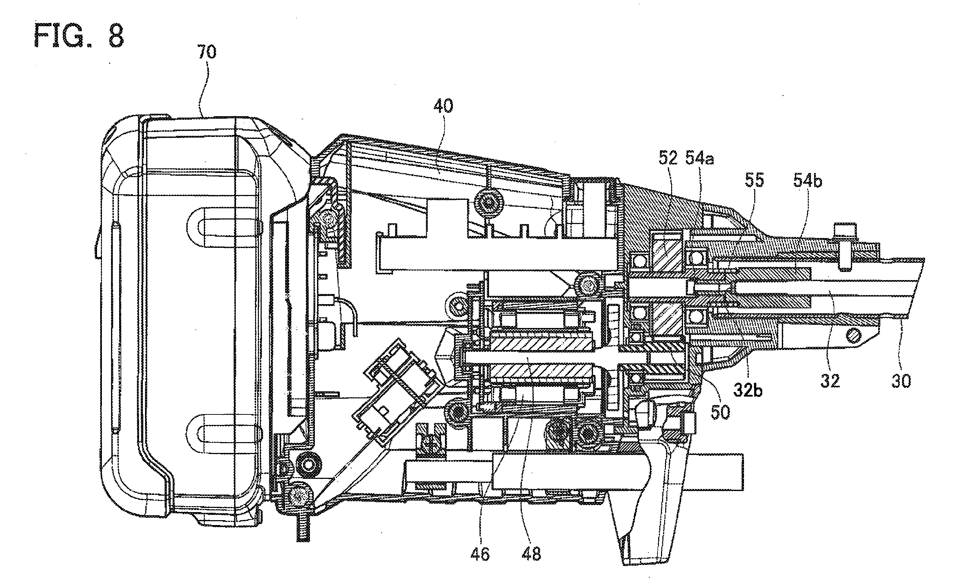

FIG. 8 illustrates a variation of the main unit 40. In the variation illustrated in FIG. 8, the coupling structure of the second gear 52 and the transfer shaft 32 in the above-described main unit 40 is modified. Specifically, a drive side coupling shaft 54a is fixed to the second gear 52 so as not to rotate relative to the second gear 52, while a driven side coupling shaft 54b is fixed to the transfer shaft 32 so as not to rotate relative to the transfer shaft 32. The drive side coupling shaft 54a and the driven side coupling shaft 54b are adjacent to each other, in the axial direction, across a gap therebetween.

A coil spring 55 is coiled around the drive side coupling shaft 54a and the driven side coupling shaft 54b, straddling both shafts. Specifically, the drive side coupling shaft 54a is inserted into an inner hole of the coil spring 55, from one end of the latter, and the driven side coupling shaft 54b is inserted from the other end of the coil spring 55. The coil spring 55 is a square-cross section spring in which the cross-sectional shape of the coil wire is square. The inner diameter of the coil spring 55, in a natural shape, is smaller than the outer diameter of the drive side coupling shaft 54a and the driven side coupling shaft 54b. The coil spring 55 is thus elastically deformed so as to clamp the drive side coupling shaft 54a and the driven side coupling shaft 54b. As a result, the torque from the drive side coupling shaft 54a is transferred to the driven side coupling shaft 54b via the coil spring 55.

The coiling direction of the coil spring 55 from the drive side coupling shaft 54a to the driven side coupling shaft 54b is the same as the rotation direction of the drive side coupling shaft 54a. When the rotation speed of the driven side coupling shaft 54b is lower than that of the drive side coupling shaft 54a, the coil spring 55 deforms elastically and the inner diameter thereof expands. Therefore, torque transfer from the drive side coupling shaft 54a to the driven side coupling shaft 54b is restrained through expansion of the inner diameter of the coil spring 55, for instance upon start of the motor 46. As a result, the cutting blade 12 is driven gently at the start of the operation of the bush cutter 10. In case that the cutting blade 12 hits a stone or the like, and a strong braking force acts on the cutting blade 12, torque transfer from the drive side coupling shaft 54a to the driven side coupling shaft 54b is blocked likewise through expansion of the inner diameter of the coil spring 55. Damage to the cutting blade 12, and kickback in the bush cutter 10 (jumping of the bush cutter 10 on account of the reaction from an object against which the bush cutter 10 hits) are prevented as a result.
When the rotation speed of the driven side coupling shaft 54b is greater than that of drive side coupling shaft 54a, the inner diameter of the coil spring 55 shrinks, and the shafts become strongly coupled. Therefore, the cutting blade 12 is prevented from keeping on rotating, on account of inertia, after stopping of the motor 46.

A torque transfer structure that uses the above-described coil spring 55 may be provided on the side of the cutting unit 20, instead of on the side of the main unit 40. Specifically, the drive side coupling shaft 54a may be provided at the front end 32a of the transfer shaft 32, and the driven side coupling shaft 54b at the third gear 18, such that the drive side coupling shaft 54a and the driven side coupling shaft 54b are coupled by the coil spring 55. Alternatively, the torque transfer structure may be provided between the first gear 50 and the output shaft 48 of the motor 46.

Specific embodiment of the present teachings is described above, but this merely illustrates some representative possibilities for utilizing the teachings and does not restrict the claims thereof. The subject matter set forth in the claims includes variations and modifications of the specific examples set forth above. The technical elements disclosed in the specification or the drawings may be utilized separately or in all types of combinations, and are not limited to the combinations set forth in the claims at the time of filing of the application. Furthermore, the subject matter disclosed herein may be utilized to simultaneously achieve a plurality of objects or to only achieve one object.

## Claims

1. A bush cutter (10) comprising:
an operating rod (30);
a cutting unit (20) disposed at a front end (30a) of the operating rod (30) and configured to rotatably support a cutting blade (12);
a main unit (40) disposed at a rear end (30b) of the operating rod (30) and housing a motor (46) that drives the cutting blade (12);
a transfer shaft (32) disposed within the operating rod (30) and configured to transfer output torque of the motor (46) from the main unit (40) to the cutting unit (20);
a handle (34, 34a, 34b) provided to the operating rod (30) and adapted to be gripped by a user; **characterised by**
a trigger-type start switch (33) provided to the handle (34) and adapted to rotate the motor (46) when turned on; and by
a battery pack interface (64) configured to slidably receive a battery pack (70) that supplies electric power to the motor (46), wherein a direction (Z1, Z2) in which the battery pack (70) slides in the battery pack interface (64) is angled at or over 45 degrees with respect to an central axis (X) of the operating rod (30).

2. The bush cutter (10) as in claim 1, wherein the direction (Z1, Z2) in which the battery pack (70) slides in the battery pack interface (64) is substantially perpendicular to the central axis (X) of the operating rod (30).

3. The bush cutter (10) as in claim 1 or 2, wherein the operating rod (30) is connected to a front portion (40a) of the main unit (40) and the battery pack interface (64) is arranged on a rear portion (40b) of the main unit (40).

4. The bush cutter (10) as in any one of claims 1 to 3, wherein, when a rotation axis (Y) of the cutting blade (12) and the central axis (X) of the operating rod (30) are arranged on a vertical plane, the direction (Z1, Z2) in which the battery pack (70) slides in the battery pack interface (64) becomes parallel with the vertical plane.

5. The bush cutter as in any one of claims 1 to 4, wherein, when a rotation axis (Y) of the cutting blade (12) and the central axis (X) of the operating rod (30) are arranged on a vertical plane and the central axis (X) of the operating rod (30) is arranged on a horizontal plane, a direction (Z1) in which the battery pack (70) slides to be attached to the battery pack interface (64) becomes downward and a direction (Z2) in which the battery pack (70) slides to be detached from the battery pack interface (64) becomes upward.

## Patentansprüche

1. Buschschneider (10), mit
einem Betätigungsstab (30),
einer Schneideeinheit (20), die an einem vorderen Ende (30a) des Betätigungsstabs (30) angeordnet ist, und zum drehbaren Lagern eines Schneidemessers (12) konfiguriert ist,
einer Haupteinheit (40), die an einem hinteren Ende (30b) des Betätigungsstabs (30) angeordnet ist und einen Motor (46) beherbergt, der das Schneidemesser (12) antreibt,
einer Transferwelle (32), die innerhalb des Betätigungsstabes (30) angeordnet ist und zum Transferieren eines Ausgabedrehmoments des Motors (46) von der Haupteinheit (40) an die Schneideeinheit (20) konfiguriert ist,
einem Handgriff (34, 34a, 34b) der an dem Betätigungsstab (30) vorgesehen ist und zum Greifen durch einen Benutzer angepasst ist, **gekennzeichnet durch**
einen Startschalter (13) von Typ eines Abzugshebels, der an dem Handgriff (34) vorgesehen ist und zum Drehen des Motors (46) **durch** Anschalten, angepasst ist, und **durch**
einen Batteriepackanschluss (64), der zum gleitbaren Aufnehmen eines Batteriepacks (70), das elektrischen Strom dem Motor (46) zuführt, konfiguriert ist, wobei eine Richtung (Z1, Z2) in welche das Batteriepack (70) in dem Batteriepackanschluss (64) gleitet, mit Bezug auf eine zentrale Achse (X) des Betätigungsstabes (30) mit einem Winkel von 45 Grad oder höher geneigt ist.

2. Buschschneider (10) nach Anspruch 1, bei dem die Richtung (Z1, Z2), in welche das Batteriepack (70) in dem Batteriepackanschluss (64) gleitet im Wesentlichen senkrecht zu der zentralen Achse (X) des Betätigungsstabes (30) ist.

3. Buschschneider (10) nach Ansprch 1 oder 2, bei dem der Betätigungsstab (30) mit einem vorderen Teil (40a) der Haupteinheit (40) verbunden ist und der Batteriepackanschluss (64) an einem hinteren Teil (40b) der Haupteinheit (40) angeordnet ist.

4. Buschschneider (10) nach einem der Ansprüche 1 bis 3, bei dem, wenn eine Rotationsachse (Y) des Schneidemessers (12) und die zentrale Achse (X) des Betätigungsstabes (30) in einer vertikalen Ebene angeordnet sind, die Richtung (Z1, Z2), in welcher der Batteripack (70) in dem Batteriepackanschluss (64) gleitet, parallel mit der vertikalen Ebene wird.

5. Buschschneider nach einem der Ansprüche 1 bis 4, bei dem, wenn eine Rotationsachse (Y) des Schneidemessers (12) und die zentrale Achse (X) des Betätigungsstabes (30a) in einer vertikalen Ebene angeordnet sind und die zentrale Achse (X) des Betätigungsstabes (30) in einer horizontalen Ebene angeordnet ist, eine Richtung (Z1), in welche das Batteriepack (70) zum Befestigtwerden an den Batteriepackanschluss (64) gleitet, nach unten gerichtet ist, und eine Richtung (Z2), in welche das Batteriepack (70) zum Lösen von dem Batteriepackanschluss (64) gleitet, nach oben gerichtet ist.

## Revendications

1. Une débrousailleuse (10) comprenant :
une tige de commande (30) ;
une unité de découpe (20) disposée à l'extrémité avant (30a) de la tige de commande (30) et agencée pour supporter de manière rotative une lame de découpe (12) ;
une unité principale (40) disposée à une extrémité arrière (30b) de la tige de commande (30) et logeant un moteur (46) qui entraîne la lame de découpe (12) ;
un arbre de transmission (32) disposé dans la tige de commande (30) et agencé pour transférer le couple de sortie du moteur (46) de l'unité principale (40) vers l'unité de découpe (20) ;
une poignée (34, 34a, 34b) présente sur la tige de commande (30) et agencée pour être saisie par un utilisateur ;
**caractérisée par**
un interrupteur de démarrage à gâchette (33) présent sur la poignée (34) et agencé pour mettre en rotation le moteur (46) lorsqu'il est en position de marche ; et
par un système de jonction d'une batterie (64) agencée pour recevoir de manière coulissante une batterie (70) qui fournit de l'énergie électrique au moteur (46), dans lequel une direction (Z1, Z2) dans laquelle la batterie (70) coulisse dans le système de jonction de batterie (64) est orientée à ou à plus de 45 degrés par rapport à un axe central (X) de la tige de commande (30).

2. La débrousailleuse (10) selon la revendication 1, dans laquelle la direction (Z1, Z2) dans laquelle la batterie (70) coulisse dans le système de jonction d'une batterie (64) est orientée de manière substantiellement perpendiculaire par rapport à l'axe central (X) de la tige de commande (30).

3. La débrousailleuse (10) selon la revendication 1 ou 2, dans laquelle la tige de commande (30) est connectée à une partie frontale (40a) de l'unité principale (40) et le système de jonction de batterie (64) est placé sur une face arrière (40b) de l'unité principale (40).

4. La débrousailleuse (10) selon l'une quelconque des revendications 1 à 3, dans laquelle, lorsqu'un axe de rotation (Y) de la lame de découpe (12) et l'axe central (X) de la tige de commande (30) sont placés dans un plan vertical, la direction (Z1, Z2) dans laquelle la batterie (70) coulisse dans le système de jonction de batterie (64) est parallèle au plan vertical.

5. La débrousailleuse selon l'une quelconque des revendications 1 à 4, dans laquelle, lorsqu'un axe de rotation (Y) de la lame de découpe (12) et l'axe central (X) de la tige de commande (30) sont placés dans un plan vertical, et l'axe central (X) de la tige de commande (30) est placé dans un plan horizontal, une direction (Z1) dans laquelle la batterie (70) coulisse pour être attachée au système de jonction de batterie (64) est dirigée vers le bas et une direction (Z2) dans laquelle la batterie (70) coulisse de façon à être détachée du système de jonction de batterie (64) est dirigée vers le haut.
